## Europäisches Patentamt
## European Patent Office
## Office européen des brevets

(19)

(11) Numéro de publication : **0 126 683**
**B1**

(12) **FASCICULE DE BREVET EUROPÉEN**

(45) Date de publication du fascicule du brevet :
**19.08.87**

(51) Int. Cl.⁴ : **A 01 D 65/00**

(21) Numéro de dépôt : **84400974.6**

(22) Date de dépôt : **11.05.84**

(54) **Dispositif de relevage de végétation.**

(30) Priorité : **13.05.83 FR 8307988**

(43) Date de publication de la demande :
**28.11.84 Bulletin 84/48**

(45) Mention de la délivrance du brevet :
**19.08.87 Bulletin 87/34**

(84) Etats contractants désignés :
**AT BE CH DE GB IT LI LU NL SE**

(56) Documents cités :
**AU-A- 423 886**
**CH-A- 279 197**
**DE-A- 2 427 145**
**SU-A- 186 792**
**US-A- 2 294 646**

(73) Titulaire : **Duval, Michel**
**Epaney**
**F-14170 Saint-Pierre/Dives (FR)**

(72) Inventeur : **Duval, Michel**
**Epaney**
**F-14170 Saint-Pierre/Dives (FR)**

(74) Mandataire : **Phélip, Bruno et al**
**c/o Cabinet Harlé & Phélip 21, rue de la Rochefoucauld**
**F-75009 Paris (FR)**

Jouve, 18, rue St-Denis, 75001 Paris, France

EP 0 126 683 B1

## Description

La présente invention est relative à un dispositif de relevage de la végétation en vue de la récolte.

Parmi les plantes cultivées, certaines se prètent plus difficilement que d'autres à la mécanisation complète de la récolte. En particulier, les légumineuses, et notamment le pois protéagineux ont un système végétatif aérien qui tend à s'étaler largement sur le sol et doivent être relevées de façon systématique pour accéder aux moyens de récolte proprement dits, à savoir les lames d'une moissonneuse par exemple. La fragilité relative des tiges rend l'opération de relevage délicate, et celle-ci doit être menée avec précision.

On utilise en général un dispositif de relevage qui comprend un patin, disposé pour glisser sur le sol et supporté par un bras releveur, oblique par rapport au sol et qui relève progressivement les parties de plante à mesure de l'avance de la machine de récolte, jusqu'à amener ces parties de plante au contact des moyens de récolte. Pour s'adapter aux variations locales de niveau du sol par rapport aux moyens de récolte, portés par tracteur ou remorque, ou autoportés à une hauteur sensible constante en moyenne, les bras releveurs sont reliés à un support fixe, solidaire des moyens de récolte, par une articulation à axe horizontal perpendiculaire au sens de l'avancement. Le patin glisse sur le sol sous l'effet de son poids, auquel s'ajoute en général l'effet d'un ressort. Le patin est relevé à l'avant à la façon d'un ski pour faciliter sa progression sur le sol.

Cette disposition présente l'inconvénient qu'elle nécessite un sol relativement bien nivelé, en effet, dans les parties creuses, le patin s'abaisse, la pente du bras releveur augmente en conséquence, ce qui entraîne des bris de tiges sous l'effet d'un relèvement trop rapide. A l'opposé, dans les parties en surélévation, la pente du bras releveur est réduite, et les plantes, sous l'effet de leur poids et de leur souplesse, retombent de part et d'autre du bras releveur. Ces deux phénomènes conduisent à des irrégularités dans la récolte.

La présente invention a pour but de supprimer cet inconvénient, afin d'assurer une récolte plus régulière.

US-A-2.294.646 décrit un dispositif de relevage de végétation comprenant un patin solidaire d'un tube cylindrique fendu dans lequel coulisse un piston agissant sur un ressort. Du fait que le tube cylindrique est fendu il résulte obligatoirement une certaine occlusion et un fonctionnement irrégulier.

L'invention fournit donc un dispositif de relevage de végétation en vue de la récolte comprenant un patin (1) destiné à glisser sur le sol et supporté par un bras releveur incliné, ce bras servant à soulever les parties de plantes qui ont été écartées du sol par le patin afin de les amener dans une position convenable pour la récolte, le bras releveur étant relié à un support fixe par rapport à des moyens de récolte tels qu'une moissonneuse, le bras releveur et le patin étant capables de mouvements limités par rapport audit support fixe en fonction des irrégularités du sol par l'intermédiaire de moyens appropriés, le bras releveur étant incliné par rapport au sol d'un angle fixe, déterminé en fonction de la nature de la végétation, lesdits moyens appropriés assurant les mouvements limités comprenant un tube cylindrique et un piston mobile à l'intérieur du tube cylindrique, dispositif caractérisé en ce que ledit tube cylindrique est fixe et solidaire dudit support fixe tandis que le piston est solidaire du patin et en ce qu'il comporte un profilé entourant extérieurement ledit tube et fixe par rapport au piston et au patin, ledit profilé ayant un anneau fermé entourant le tube, cet anneau venant en butée contre le support fixe pour limiter le déplacement du patin vers le bas.

Suivant des modalités avantageuses :

Le tube fixe est équipé de moyens agissant sur le piston afin d'amener le patin à exercer une pression déterminée sur le sol.

Lesdits moyens agissant sur le piston comprennent un ou plusieurs ressorts de compression de force réglable.

Lesdits moyens agissant sur le piston comprennent un vérin hydraulique équipé de moyens de réglage communs à tous les patins d'une moissonneuse.

Le profilé comporte une partie à section en arc de cercle venant recouvrir la partie supérieure de la section de piston et du tube cylindrique.

Il est prévu des moyens de butée qui coopèrent avec le bord de la section en arc de cercle du profilé pour empêcher la rotation du profilé autour de l'axe du tube.

L'invention va maintenant être décrite plus en détail à l'aide d'un exemple pratique de réalisation, non limitatif, et illustré aux dessins parmi lesquels :

Figure 1 est une coupe longitudinale du dispositif ;

Figure 2 est une coupe selon la ligne II-II de la figure 1 ;

Figure 3 est une coupe selon la ligne III-III de la figure 1.

Le patin 1 a la forme classique d'une lame métallique terminée dans le sens de la marche (à gauche sur la figure) par une pointe 2 légèrement relevée.

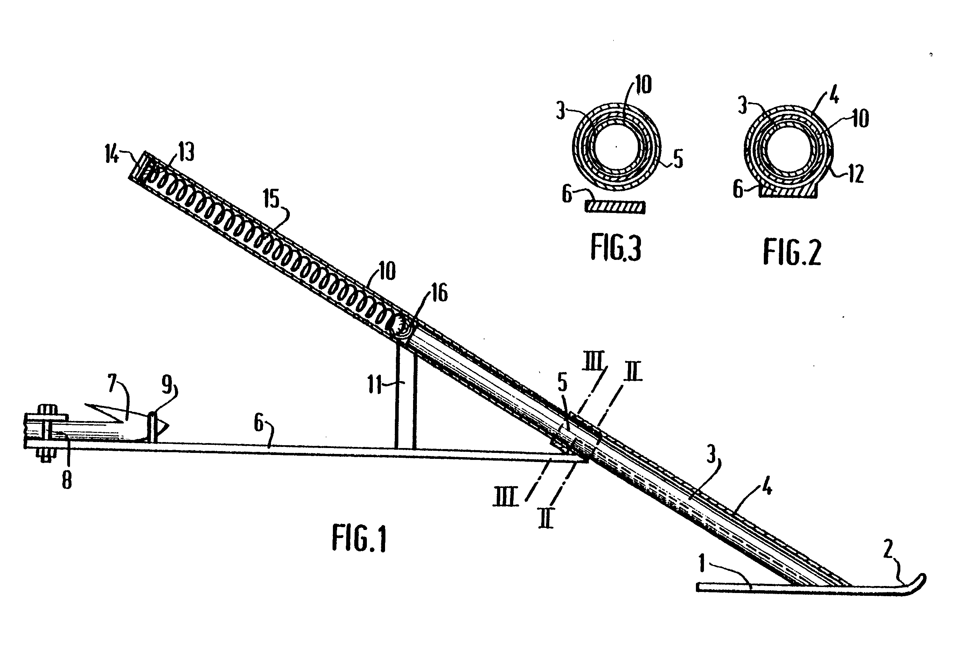

Sur le patin sont soudées deux pièces coaxiales tubulaires. La pièce interne 3 appelée piston est constituée par un tube à section circulaire, dont l'axe fait un angle de 30° avec celui du patin, et est dans le même plan longitudinal. La pièce externe 4 appelée « le profilé » a, sur la plus grande partie de sa longueur, une section en arc de cercle, situé au-dessus du piston, comme indiqué sur la figure 2. Elle se termine par une partie formant un anneau 5 qui entoure complètement le piston. Entre le piston et le profilé, il existe un intervalle dont on va voir l'utilité.

Une barre support horizontale 6 est montée de façon à être solidaire des moyens de coupe. Dans le cas présenté, elle montre sous une dent 7 de la moissonneuse à l'aide d'un boulon 8 et d'un anneau 9 qui entoure l'extrémité de la dent. Sur la barre support 6 est fixé un tube cylindrique 10, soudé d'une part à l'extrémité de la barre support et d'autre part sur un montant 11, lui-même porté par la barre support, si bien que le tube 10 fait un angle de 30° avec l'horizontale. Le tube 10 ne s'étend pas vers l'avant au-delà de l'extrémité de la barre support 6, mais s'étend en sens inverse notablement au-delà du montant 11. Le diamètre du tube 10 est compris entre celui du piston 3 et celui du profilé 4 et il se trouve placé entre ces deux pièces pour un coulissement sans frottement. La partie annulaire 5 du profilé 4 est située entre les deux fixations du tube, à savoir entre l'extrémité de la barre support 6 et le montant 11, si bien que l'ensemble formé par le patin 1, le piston 3 et le profilé 4 peut se déplacer de façon rectiligne, suivant une direction qui fait 30° avec l'horizontale, sans pouvoir s'échapper, les positions extrêmes étant celles où la partie tubulaire 5 vient en butée contre l'extrémité de la barre support 6 ou contre le montant 11.

L'extrémité de la barre support 6 comprend une partie incurvée 12 pour avoir une section en demi-cercle épousant la forme extérieure du cylindre 10, ce qui empêche le profilé 4 de tourner autour de son axe.

L'extrémité arrière du tube 10 est pourvue d'un bouchon 13, retenu par une goupille 14. Ce bouchon sert de point d'appui à un ressort hélicoïdal 15 qui travaille à la compression et appuie sur l'extrémité du piston 3 par l'intermédiaire d'une bille 16.

On notera que la partie supérieure du dispositif, constituée par le profilé 4 et le tube 10 ne comporte aucune aspérité qui puisse accrocher la végétation dans son trajet ascendant d'avant en arrière.

L'angle de 30° fait par le tube 10 avec l'horizontale résulte d'une détermination expérimentale correspondant à la récolte de pois protéagineux avec une moissonneuse d'un type courant. Pour d'autres récoltes, un angle différent peut se révéler plus avantageux.

Si la pression au sol exercée par le patin doit être changée, on peut facilement remplacer le ressort 15 par un autre plus fort ou plus faible. Au cas où de tels changements seraient fréquents, il est possible de remplacer le système à ressort par un système à vérin hydraulique, qui permet de modifier par une seule manœuvre la pression de tous les patins équipant une moissonneuse. Cette disposition plus coûteuse fait, dans ce cas, gagner du temps.

**Revendications**

1. Dispositif de relevage de végétation en vue de la récolte comprenant un patin (1) destiné à glisser sur le sol et supporté par un bras releveur incliné, ce bras servant à soulever les parties de plantes qui ont été écartées du sol par le patin (1) afin de les amener dans une position convenable pour la récolte, le bras releveur étant relié à un support fixe (6) par rapport à des moyens de récolte tels qu'une moissonneuse, le bras releveur et le patin (1) étant capables de mouvements limités par rapport audit support fixe (6) en fonction des irrégularités du sol par l'intermédiaire de moyens appropriés, le bras releveur étant incliné par rapport au sol d'un angle fixe, déterminé en fonction de la nature de la végétation, lesdits moyens appropriés assurant les mouvements limités comprenant un tube cylindrique (10), et un piston mobile à l'intérieur du tube cylindrique (10), caractérisé en ce que ledit tube cylindrique (10) est fixe et solidaire dudit support fixe (6) tandis que le piston (3) est solidaire du patin (1) et en ce que le dispositif de relevage comporte un profilé (4) entourant extérieurement ledit tube (10) et fixe par rapport au piston (3) et au patin (1), ledit profilé (4) ayant un anneau fermé (5) entourant le tube (10), cet anneau (5) venant en butée contre le support fixe (6) pour limiter le déplacement du patin (1) vers le bas.

2. Dispositif selon la revendication 1, caractérisé en ce que le tube fixe (10) est équipé de moyens agissant sur le piston (3) afin d'amener le patin (1) à exercer une pression déterminée sur le sol.

3. Dispositif selon la revendication 2, caractérisé en ce que lesdits moyens agissant sur le piston (3) comprennent un ou plusieurs ressorts de compression (15) de force réglable.

4. Dispositif selon la revendication 2, caractérisé en ce que lesdits moyens agissant sur le piston (3) comprennent un vérin hydraulique équipé de moyens de réglage communs à tous les patins (1) d'une moissonneuse.

5. Dispositif selon l'une des revendications 1 à 4, caractérisé en ce que le profilé (4) comporte une partie à section en arc de cercle venant recouvrir la partie supérieure de la section de piston (3) et du tube cylindrique (10).

6. Dispositif selon la revendication 5, caractérisé en ce qu'il est prévu des moyens de butée qui coopèrent avec le bord de la section en arc de cercle du profilé (4) pour empêcher la rotation du profilé (14) autour de l'axe du tube (10).

**Claims**

1. Device for lifting vegetation for harvesting purposes, comprising a shoe (1) intended to slide on the ground and supported by an inclined lifting arm, this arm serving for raising the parts of plants moved away from the ground by the shoe (1), in order to bring them into a suitable position for harvesting, the lifting arm being connected to a support (6) fixed relative to harvesting means, such as a reaper, the lifting arm and the shoe (1) being capable of executing limited movements relative to the said fixed support (6) as a function of the unevenness of the ground by the agency of suitable means, the lifting arm being inclined relative to the ground at a fixed angle determined as a function of the type of vegetation, the said suitable means which ensure the limited movements comprising a cylindrical tube (10) and a piston (3) movable inside the cylindrical tube (10), characterized in that the said cylindrical tube (10) is fixed and integral with the said fixed support (6), whilst the piston (3) is integral with the shoe (1), and in that the lifting device has a section (4) surrounding the said tube (10) on the outside and fixed relative to the piston (3) and to the shoe (1), the said section (4) having a closed ring (5) surrounding the tube (10), this ring (5) coming up against the fixed support (6) in order to limit the downward movement of the shoe (1).

2. Device according to Claim 1, characterized in that the fixed tube (10) is equipped with means acting on the piston (3) in order to cause the shoe (1) to exert a specific pressure on the ground.

3. Device according to Claim 2, characterized in that the said means acting on the piston (3) comprise one or more compression springs (15) of adjustable force.

4. Device according to Claim 2, characterized in that the said means acting on the piston (3) comprise a hydraulic jack equipped with adjustment means common to all the shoes (1) of a reaper.

5. Device according to one of Claims 1 to 4, characterized in that the section (4) has a part having a cross-section in the form of an arc of a circle and covering the upper part of the piston portion (3) and the cylindrical tube (10).

6. Device according to Claim 5, characterized in that there are stop means which interact with the edge of the cross-section in the form of an arc of a circle of the section (4) in order to prevent the section (4) from rotating about the axis of the tube (10).

**Patentansprüche**

1. Vegetationsaufnahmevorrichtung für die Ernte, umfassend einen Schuh (1), bestimmt zum Gleiten auf dem Boden und getragen und von einem schrägen Aufnahmearm, der dazu dient, die Pflanzenteile zu heben, die mittels des Schuhs (1) vom Boden abgelöst worden sind, um sie in eine für die Ernte günstige Position zu fördern, wobei der Aufnahmearm mit einem Support (6) relativ zu Erntemitteln, wie einer

Mähvorrichtung, fest verbunden ist, wobei der Aufnahmearm und der Schuh (1) begrenzte Bewegungen relativ zu dem genannten festen Support (6) in Abhängigkeit von Unregelmäßigkeiten des Bodens über geeignete Mittel ausführen können, wobei der Aufnahmearm schräg steht relativ zum Boden unter einem festen Winkel, festgelegt in Abhängigkeit von der Natur der Vegetation, wobei die genannten, die begrenzten Bewegungen gewährleistenden geeigneten Mittel ein zylindrisches Rohr (10) und einen Kolben (3), der im Innern des zylindrischen Rohrs (10) beweglich ist, umfassen, dadurch gekennzeichnet, daß das genannte zylindrische Rohr (10) fest ist und verbunden ist mit dem genannten festen Support (6), während der Kolben (3) mit dem Schuh (1) verbunden ist und daß die Aufnahmevorrichtung ein Profil (4) umfaßt, das außen das genannte Rohr (10) umschließt und fest ist relativ zum Kolben (3) und zum Schuh (1), wobei das Profil (4) einen geschlossenen Ring (5) aufweist, der das Rohr (10) umschließt, welcher Ring (5) an dem festen Support (6) zum Anschlag gelangt, um die Verlagerung des Schuhs (1) in Richtung nach unten zu begrenzen.

2. Vorrichtung nach Anspruch 1, dadurch gekennzeichnet, daß das feste Rohr (10) mit Mitteln versehen ist, die auf den Kolben (3) einwirken, um den Schuh (1) zum Ausüben eines vorgegebenen Druckes gegen den Boden zu bringen.

3. Vorrichtung nach Anspruch 2, dadurch gekennzeichnet, daß die genannten auf den Kolben (3) einwirkenden Mittel eine oder mehrere Druckfedern (15) einstellbarer Kraft umfassen.

4. Vorrichtung nach Anspruch 2, dadurch gekennzeichnet, daß die genannten auf den Kolben (3) einwirkenden Mittel einen Hydraulikarbeitszylinder umfassen, versehen mit Mitteln zur gemeinsamen Einstellung für alle Schuhe (1) einer Mähmaschine.

5. Vorrichtung nach einem der Ansprüche 1 bis 4, dadurch gekennzeichnet, daß das Profil (4) einen Abschnitt mit kreisbogenförmigem Querschnitt umfaßt, der den oberen Teil des Querschnitts des Kolbens (3) und des zylindrischen Rohres (10) überdeckt.

6. Vorrichtung nach Anspruch 5, dadurch gekennzeichnet, daß Anschlagmittel vorgesehen sind, die mit der Kante des kreisbogenförmigen Abschnitts des Profils (4) zusammenwirken zum Unterbinden der Drehung des Profils (4) um die Achse des Rohres (10).

FIG.3

FIG.2

FIG.1

0 126 683